# FASCICULE DE BREVET EUROPEEN

(11) **EP 4 572 322 B1**
(45) Date de publication et mention de la délivrance du brevet: **12.08.2026**
(21) Numéro de dépôt: 24219018.9
(22) Date de dépôt: 11.12.2024
(51) Int. Cl.: H04Q 9/00, G01D 4/00

(54) **PROCÉDÉ OPTIMISÉ DE COLLECTE DE DONNÉES À PARTIR DE COMPTEURS COMMUNICANTS VIA UN RÉSEAU CELLULAIRE ET SYSTÈME POUR EXÉCUTER LE PROCÉDÉ**
OPTIMIERTES VERFAHREN ZUR DATENSAMMLUNG AUS ZÄHLERN, DIE ÜBER EIN ZELLULARES NETZWERK KOMMUNIZIEREN, UND SYSTEM ZUR DURCHFÜHRUNG DES VERFAHRENS
OPTIMISED METHOD FOR COLLECTING DATA FROM METERS COMMUNICATING VIA A CELLULAR NETWORK AND SYSTEM FOR EXECUTING THE METHOD

(30) Priorité: 13.12.2023 FR 2314098
(43) Date de publication de la demande: 18.06.2025
(73) Titulaire: SAGEMCOM ENERGY & TELECOM SAS, 92270 Bois-Colombes (FR)
(72) Inventeur: BILLET, Claire, 92270 BOIS-COLOMBES (FR); DJAFRI, Rahid, 92270 BOIS-COLOMBES (FR)
(74) Mandataire: Cabinet Le Guen Maillet

(56) Documents cités:
- EP-A1- 2 582 181
- FR-A1- 3 073 652
- US-A1- 2019 098 377
- US-B2- 8 767 744

## Description

### DOMAINE TECHNIQUE

La présente invention concerne un procédé de collecte de données disponibles dans des compteurs communicants, exécuté par un système de collecte de données et opéré via un réseau de communication de type réseau cellulaire. Au moins un mode de réalisation de l'invention concerne un procédé de collecte de données issues de compteurs d'électricité, d'eau ou de gaz configurés pour communiquer avec un concentrateur de données via un réseau IP d'un opérateur de téléphonie mobile.

### ETAT DE LA TECHNIQUE ANTERIEURE

Les compteurs récents de consommation d'électricité sont des dispositifs électroniques dits « intelligents » et/ou « communicants » aptes à générer et transmettre des données vers un serveur ou un système distant opérant des fonctions de collecte de données, par exemple un serveur de gestion de consommation, à travers des réseaux de communication variés, notamment pour des services de tarification et de collecte d'informations en lien avec une consommation d'électricité, d'eau ou de gaz. Certains de ces compteurs sont configurés pour transmettre les données qu'ils ont générées via un réseau de communication de type cellulaire, tel que, par exemple, un réseau d'un opérateur de téléphonie mobile. Un tel réseau est constitué d'un ensemble de cellules de communication dans lequel chaque cellule est couverte par une station d'émission et réception dite station de base. En d'autres termes, le territoire couvert par le réseau de communication cellulaire est découpé en cellules comprenant chacune une station de base. Chacune des cellules comprend un ou plusieurs compteurs communicants générant des informations utiles à la gestion d'une ou plusieurs fournitures de service ou de produits. Il est alors nécessaire d'opérer une collecte de données depuis ces compteurs en tenant compte de la capacité de communication de chacune des cellules du réseau de communication. Les techniques actuelles de collecte d'informations à partir des compteurs sont susceptibles de provoquer des effets de congestion du réseau de communication cellulaire, d'autant plus que les compteurs communicants sont parfois des équipements mis en veille entre deux opérations de traitement ou de collecte d'informations, ce qui implique qu'il soit d'abord nécessaire de contrôler le compteur pour le réveiller, puis de collecter ensuite les informations utiles. D'autres fois les compteurs sont temporairement rendus hors de portée du réseau du fait de perturbations. Lorsqu'une collecte d'informations ciblant un compteur échoue, celle-ci doit être réitérée jusqu'à ce que les informations soient collectées, ce qui implique une utilisation redondante des ressources réseaux pour des mêmes informations. Il existe donc un besoin d'optimiser les méthodes de collecte pour obtenir de nombreuses données depuis un ensemble de compteurs, selon des contraintes calendaires imposées, tout en limitant l'utilisation des ressources réseaux qui sont en outre utilisées pour d'autres usages. La situation peut être améliorée.

Le document US 8 767 744 B2 divulgue déjà un procédé de transmission priorisée de données de comptage.

### EXPOSE DE L'INVENTION

L'invention a pour but de proposer un procédé de collecte de données depuis des compteurs communicants, selon des contraintes calendaires, en limitant l'usage des ressources réseaux. L'invention est définie dans le jeu de revendications annexé.

A cet effet, il est proposé un procédé de collecte, via un réseau de communication de type cellulaire, de données disponibles dans un ensemble de compteurs communicants, le procédé étant exécuté dans un système de collecte de données connecté audit réseau et le procédé comprenant :
- i) obtenir des premières informations représentatives du comportement desdits compteurs,
- ii) établir des paramètres représentatifs du comportement de chacun des compteurs communicants à partir desdites premières informations,
- iii) établir un ordonnancement de collecte de données de tout ou partie desdits compteurs à partir desdits paramètres représentatifs du comportement de chacun des compteurs, et,
- iv) transmettre des messages de collecte de données vers lesdits compteurs selon ledit ordonnancement établi.

Avantageusement, il est ainsi possible, grâce à un apprentissage du comportement typique de chacun des compteurs communicants, de ne prévoir d'opérer une collecte de données auprès d'un compteur que lorsque celui-ci présentera la plus grande probabilité de répondre (et donc de répondre du premier coup). Le partage du réseau de communication cellulaire est alors réalisé de manière raisonnable entre le système de collecte et les autres applications qui utilisent le réseau. En outre, un tel procédé permet avantageusement de détecter des phénomènes de saisonnalité dans le comportement des compteurs communicants reliés au réseau de communication de type cellulaire et d'en tenir compte pour les collectes de données à réaliser.

Le procédé selon l'invention peut en outre comprendre les caractéristiques optionnelles considérées isolément ou en combinaisons :
- Lesdites premières informations comprennent au moins (selon l'invention)
   ∘ un identifiant de cellule dudit réseau en référence à un identifiant de compteur communicant,
   ∘ un état d'obtention d'une réponse d'un compteur à un message qui lui est adressé en référence à un horodatage,
   ∘ un temps de réponse d'un compteur à un message qui lui est adressé, le cas échéant, en référence à un horodatage.

Ainsi, il est possible de déterminer des paramètres de comportement de chacun des compteurs que sont par exemple un temps de réponse moyen et un taux de réponse moyen pour chaque compteur, en fonction du jour et de l'heure, et en référence à une cellule via laquelle il est accessible.
- Etablir un ordonnancement de collecte de données à partir des paramètres établis est réalisé en référence, pour chacun des compteurs communicants, à un identifiant de cellule à partir de laquelle un compteur communicant est accessible.
- Etablir les paramètres représentatifs du comportement de chacun des compteurs comprend une analyse statistique (selon une alternative de l'invention).
- L'analyse statistique est opérée en référence à un temps maximal de collecte.
- L'analyse statistique est opérée en référence à une utilisation minimale du réseau de communication.
- Etablir les paramètres représentatifs du comportement de chacun des compteurs comprend un apprentissage au moyen d'un module de type classifieur.
- L'apprentissage au moyen d'un module de type classifieur est opéré en référence à un temps maximal de collecte.
- L'apprentissage au moyen d'un module de type classifieur est opéré en référence à une utilisation minimale du réseau de communication.

L'invention a également pour objet un système (ou dispositif) de collecte, via un réseau de communication de type cellulaire, de données disponibles dans un ensemble de compteurs communicants, le système de collecte comprenant de la circuiterie électronique configurée pour :
- i) obtenir des premières informations représentatives du comportement desdits compteurs,
- ii) établir des paramètres représentatifs du comportement de chacun des compteurs communicants à partir desdites premières informations,
- iii) établir un ordonnancement de collecte de données de tout ou partie desdits compteurs à partir desdits paramètres représentatifs du comportement de chacun des compteurs, et,
- iv) transmettre des messages de collecte de données vers lesdits compteurs selon ledit ordonnancement établi.

Le système de collecte selon l'invention peut en outre comprendre les caractéristiques optionnelles considérées isolément ou en combinaisons :
- Le système de collecte de données comprend en outre de la circuiterie configurée pour traiter lesdites premières informations comprenant (selon l'invention):
   ∘ un identifiant de cellule dudit réseau en référence à un identifiant de compteur communicant,
   ∘ un état d'obtention d'une réponse d'un compteur à un message qui lui est adressé en référence à un horodatage,
   ∘ un temps de réponse d'un compteur à un message qui lui est adressé, le cas échéant, en référence à un horodatage.
- Le système de collecte de données comprend de la circuiterie électronique configurée pour établir un ordonnancement de collecte de données à partir des paramètres établis en référence, pour chacun des compteurs communicants, à un identifiant de cellule à partir de laquelle un compteur communicant est accessible.
- Le système de collecte de données comprend en outre de la circuiterie électronique configurée pour établir les paramètres représentatifs du comportement de chacun des compteurs en opérant une analyse statistique (selon une alternative de l'invention).
- Le système de collecte de données comprend en outre de la circuiterie électronique configurée pour opérer l'analyse statistique en référence à un temps maximal de collecte.
- Le système de collecte de données comprend en outre de la circuiterie électronique configurée pour opérer l'analyse statistique en référence à une utilisation minimale du réseau de communication.
- Le système de de collecte de données comprend en outre de la circuiterie électronique configurée pour établir les paramètres représentatifs du comportement de chacun des compteurs par un apprentissage au moyen d'un module de type classifieur.
- Le système de collecte de données comprend en outre de la circuiterie électronique configurée pour opérer l'apprentissage au moyen d'un module de type classifieur, en référence à un temps maximal de collecte.

Un autre objet de l'invention est un produit programme d'ordinateur comprenant des instructions de codes de programme pour exécuter les étapes d'un procédé tel que précédemment décrit, lorsque ce programme est exécuté par un processeur d'un système de collecte de données.

Enfin, l'invention a également pour objet un support de stockage d'informations comprenant un produit programme d'ordinateur tel que cité ci-avant.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins j oints, parmi lesquels :
[Fig. 1] illustre schématiquement un compteur communicant générant des données à collecter, tel que déjà connu ;
[Fig. 2] est une représentation schématique d'un réseau de communication de type cellulaire auquel sont connectés des compteurs communicants et comprenant un système amélioré de collecte de données générées par les compteurs, selon un mode de réalisation ;
[Fig. 3] est un ordinogramme illustrant un procédé amélioré de collecte de données exécuté dans le réseau de communication déjà représenté sur la Fig. 2, selon un mode de réalisation ; et,
[Fig. 4] est un diagramme illustrant une architecture interne d'un système ou dispositif de collecte de données générées par des compteurs communicants, selon un mode de réalisation.

### EXPOSE DETAILLE DE MODES DE REALISATION

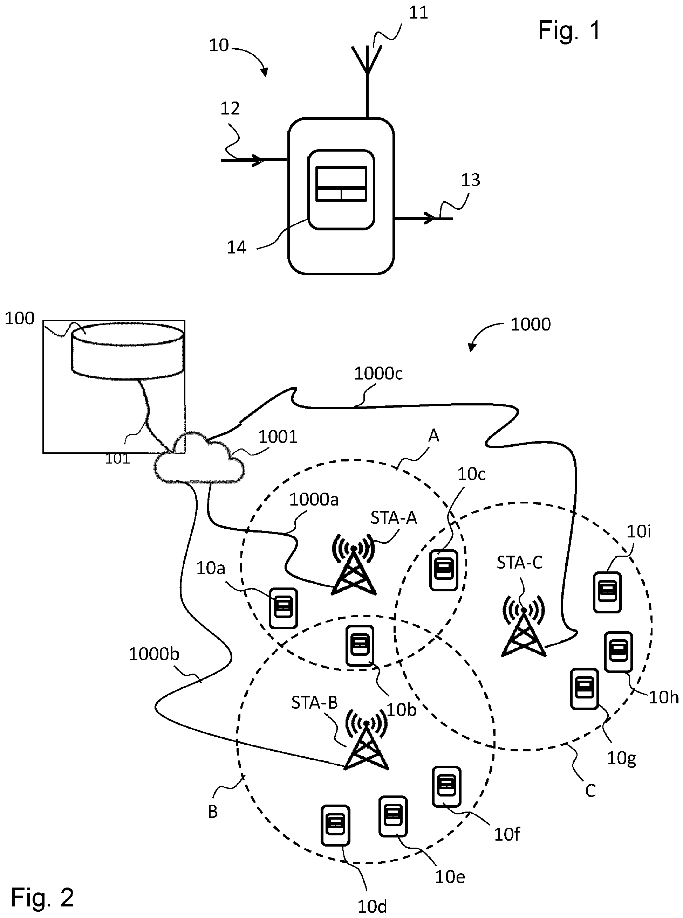

La Fig. 1 illustre schématiquement un compteur communicant 10, déjà connu dans l'état de la technique et configuré pour collecter des informations de fourniture d'une grandeur physique telle que de l'eau, de l'électricité ou du gaz, par exemple. Un tel compteur communicant est encore parfois appelé compteur intelligent ou « *smartmeter* » (de l'anglais). Le compteur communicant 10 est agencé pour opérer un comptage d'une grandeur physique distribuée et transitant entre une entrée 12 du compteur communicant 10, raccordée à un réseau de fourniture de la grandeur physique, et une sortie 13 du compteur communicant 10, raccordée à une installation domestique, industrielle ou commerciale, par exemple, consommatrice de la grandeur physique distribuée et dont la consommation doit être mesurée et/ou contrôlée à distance. Le compteur communicant 10 comprend une interface homme-machine 14 encore appelée interface utilisateur apte à la saisie et à l'affichage de d'informations liées à l'utilisation du compteur. Le compteur communicant 10 comprend en outre une circuiterie électronique interne comprenant notamment un ou plusieurs microcontrôleurs et une interface de communication radio (non représentée sur la figure) reliée à un système antennaire 11. Ainsi le compteur communicant 10 est configuré pour communiquer dans un réseau de communication de type cellulaire.

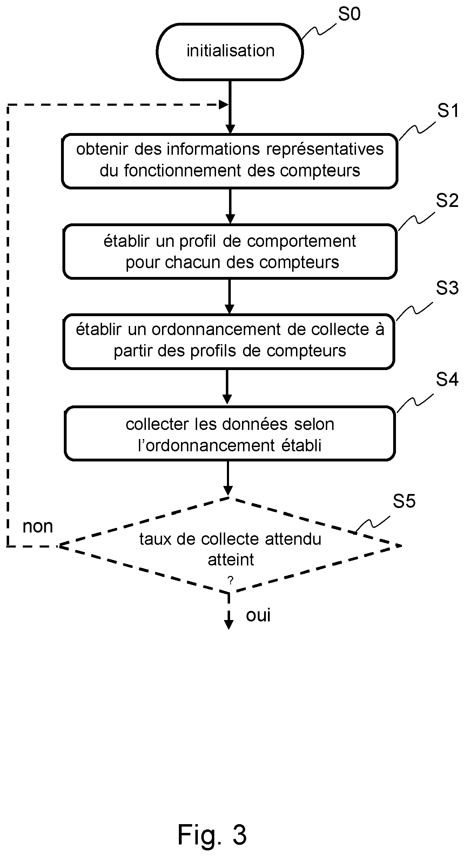

La Fig. 2 illustre schématiquement et globalement un réseau de communication 1000 de type cellulaire, comprenant un sous-réseau de communication 1001 auquel sont reliées trois stations de base STA-A, STA-B et STA-C configurées pour émettre et recevoir des signaux depuis et vers des dispositifs tiers compatibles avec le réseau de communication et connectés à celui-ci. Selon l'exemple décrit, la station de base STA-A est reliée au sous-réseau de communication 1001 via un lien filaire de communication 1000a, la station de base STA-B est reliée au sous-réseau de communication 1001 via un lien filaire de communication 1000b et la station de base STA-C est reliée au sous-réseau de communication 1001 via un lien filaire de communication 1000c. Bien évidemment, chacune des stations de base STA-A, STA-B ou STA-C pourrait être reliée au sous-réseau de communication 1001 via une liaison sans fil. Chacune des stations de base STA-A, STA-B et STA-C couvre une zone géographique nommée cellule. Selon l'exemple décrit, la station de base STA-A couvre une cellule A, la station de base STA-B couvre une cellule B et la station de base STA-C couvre une cellule C. Des compteurs communicants 10a, 10b, 10c, 10d, 10e, 10f, 10g, 10h et 10i, similaires au compteur communicant 10 précédemment décrit en relation avec la Fig. 1, sont installés dans la zone de couverture du réseau de communication 1000, établie grâce à la combinaison des stations de base STA-A, STA-B et STA-C opérant respectivement des radios transmissions dans les cellules A, B et C. Dans l'exemple décrit, le nombre de cellules du réseau de communication 1000 ainsi que le nombre de compteurs communicants sont volontairement réduits pour faciliter la lecture de la présente description et sa compréhension. Bien évidemment, dans la réalité, le nombre de cellules peut se compter en dizaines, en centaines ou en milliers pour un système de collecte de données et il en est de même pour le nombre de compteurs concernés par une collecte de données. Bien qu'un compteur communicant puisse être positionné géographiquement dans plusieurs cellules du réseau de communication 1000, il est considéré ici qu'un tel compteur communicant, relié à une installation fixe, est fixe et qu'il est en conséquence connecté à une seule cellule du réseau de communication 1000 à un instant donné. Selon un mode de réalisation, un compteur communicant localisé dans plusieurs cellules est connecté au réseau de communication 1000 via la cellule dont la station de base lui offre les meilleures performances de communication. Ainsi, selon l'exemple de réalisation décrit sur la Fig. 2, les compteurs communicants 10a, 10b et 10c sont connectés au réseau de communication 1000 via la station de base STA-A opérant dans la cellule A, les compteurs communicants 10d, 10e et 10f sont connectés au réseau de communication 1000 via la station de base STA-B opérant dans la cellule B et les compteurs communicants 10g, 10h et 10i sont connectés au réseau de communication 1000 via la station de base STA-C opérant dans la cellule C. Le réseau de communication 1000 comprend en outre un système de collecte de données 100 configuré pour collecter des données générées par les compteurs communicants 10a, 10b, 10c, 10d, 10e, 10f, 10g, 10h et 10i. Selon l'exemple décrit, le système de collecte de données 100 est relié au sous-réseau de communication 1001 via un lien filaire de communication 101. Selon une variante, le système de collecte de données 100 est relié au sous-réseau de communication 1001 via une liaison sans fil. Le système de collecte de données 100 est encore appelé ici dispositif de collecte de données ou serveur de gestion d'un fournisseur de service(s). Avantageusement, le système de collecte de données 100 est configuré pour mettre un œuvre un procédé de collecte de données visant à optimiser la collecte de données en réduisant l'usage des ressources du réseau de communication 1000, lequel réseau, de type cellulaire, a vocation à être partagé avec d'autres usages ou applications, dont notamment des applications usuelles de téléphonie mobile ou de télécommunications sur un réseau de téléphonie mobile (transport audio et/ou vidéo, par exemple). Ainsi, le système de collecte de données 100 est configuré pour exécuter un procédé de collecte amélioré décrit en relation avec la Fig. 3.

La **Fig. 3** illustre des étapes du procédé amélioré de collecte de données exécuté dans le réseau de communication 1000 ou dans un réseau de communication similaire.

Une étape **S0** correspond à une étape d'initialisation au terme de laquelle le système de collecte de données 100, ainsi que tous les systèmes du réseau de communication 1000, sont normalement configurés pour opérer des transmissions de données à travers le réseau de communication 1000. Ainsi, au terme de l'étape S0, le système de collecte de données 100 est apte à envoyer des messages aux différents compteurs communicants 10a, 10b, 10c, 10d, 10e, 10f, 10g, 10h et 10i via, selon le compteur communicant concerné par un envoi de message(s), la station de base à laquelle il est connecté. Le système de collecte de données 100 est en outre configuré pour recevoir des messages envoyés par les compteurs communicants en réponse aux messages qui leur sont adressés, dès lors que ces derniers ont la capacité à répondre. En effet, certains compteurs communicants peuvent être temporairement perturbés par des obstacles aux ondes électromagnétiques ou par de mauvaises conditions de fonctionnement du réseau de communication, ou encore en fonction de potentiels cycles de mise en veille visant à réaliser des économies d'énergie.

Astucieusement, le procédé amélioré de collecte de données exécuté par le système 100 de collecte de données générées par les différents compteurs communicants 10a, 10b, 10c, 10d, 10e, 10f, 10g, 10h et 10i opère quatre étapes principales S1, S2, S3 et S4 encore nommées ici respectivement « phase de labélisation », « phase d'apprentissage et de planification », « phase d'ordonnancement » et « phase de collecte des données ».

Lors de l'étape S1, et tout au long d'une période T d'une durée prédéfinie (par exemple une semaine complète), le système de collecte de données 100 adresse des messages protocolaires aux différents compteurs communicants 10a, 10b, 10c, 10d, 10e, 10f, 10g, 10h et 10i et recense de nombreuses informations relatives aux comportements des différents compteurs. Il s'agit là de savoir si un compteur répond ou non à un message protocolaire qui lui est adressé et dans l'affirmative, en combien de temps. Ces informations sont enregistrées en corrélation avec un identifiant du compteur communicant concerné. Lors de cette étape S1, des informations relatives à la cellule du réseau de communication 1000 via laquelle un compteur communicant a répondu ou n'a pas répondu sont obtenues et mémorisées, de sorte à pouvoir mémoriser également l'ensemble des informations en référence à un identifiant de cellule du réseau de communication 1000. Le terme « message protocolaire » désigne ici tout message présentant un format prédéfini qu'un compteur est censé pouvoir recevoir et interpréter, de sorte à y répondre et que le système de collecte de données 100 comprend lui-aussi ou à tout le moins qu'il est capable de générer et pour lequel le système de collecte de données 100 peut identifier une réponse ou une absence de réponse. Le format des messages protocolaires échangés n'est pas décrit ici dans la mesure où il ne participe pas à la compréhension de l'invention. Les messages échangés entre le système de collecte de données 100 et les compteurs communicants peuvent être échangés dans le cadre de transmissions en rapport avec une fourniture de service ou simplement dans le cadre de la recherche d'informations représentatives du fonctionnement des compteurs communicants, ou encore via une combinaison de ces deux façons de faire. Ainsi, au terme de la période T de recensement d'informations représentatives du fonctionnement des compteurs, le système de collecte de données 100 dispose d'informations relatives à chacun des compteurs communicants, du fait des nombreuses tentatives de communications opérées via les échanges de messages décrits.

Selon l'invention le système de collecte de données 100 recense et enregistre au moins des informations corrélées entre elles et se présentant sous la forme de :
- un identifiant de cellule du réseau de communication 1000 en référence à un identifiant de compteur communicant,
- un état d'obtention d'une réponse d'un compteur à un message qui lui est adressé en référence à un horodatage, par exemple « réponse » ou « absence de réponse » à l'heure courante,
- un temps de réponse d'un compteur à un message qui lui est adressé, le cas échéant, et en référence à un horodatage, par exemple un compteur donné a répondu à telle heure, après un délai de 10 secondes.

Selon un mode de réalisation, le système de collecte de données 100 dispose d'informations concernant les compteurs pour lesquels une collecte de données est à réaliser et donc les compteurs auxquels il convient d'appliquer le procédé amélioré de collecte de données. Ainsi le système de collecte de données 100 dispose par exemple d'une liste d'identifiants de compteurs communicants concernés et n'a pas besoin d'opérer une quelconque phase de découverte de compteurs communicants présents ou potentiellement présents dans une zone géographique couverte par le réseau de communication 1000. Par exemple, le système de collecte de données 100 peut envoyer un message ou plusieurs messages à chacun des compteurs présents dans une liste et utiliser ensuite des informations relatives au protocole de communication du réseau de communication 1000 de type cellulaire pour identifier via quelle station de base un compteur a pu être atteint et de fait, dans quelle cellule du réseau de communication il est localisé.

Selon un exemple de réalisation, les informations recensées et mémorisées lors de l'étape S1 sont regroupées par cellules du réseau de communication 1000, c'est-à-dire en référence à un identifiant de cellule du réseau de communication 1000.

Par exemple, un ensemble d'informations obtenues pendant la phase dite de labélisation, lors de l'étape S1, peut être organisé comme dans le tableau ci-après :

**[Table 1]**

| Identifiant de cellule (Ceid) | Identifiant de compteur (Coid) | Date (d) | Heure (h) | Etat d'obtention d'une réponse (r) | Temps de réponse (s) (tr) |
|---|---|---|---|---|---|
| A | 10a | 29/09/2023 | 00 :00 | réponse | 0,1 |
| A | 10b | 29/09/2023 | 00 :00 | réponse | 0,2 |
| A | 10c | 30/09/2023 | 00 :00 | absence de réponse | - |
| B | 10d | 30/09/2023 | 00 :00 | réponse | 0,1 |
| B | 10e | 01/10/2023 | 00 :15 | réponse | 0,2 |
| B | 10f | 01/10/2023 | 00 :30 | absence de réponse | - |
| C | 10g | 01/10/2023 | 00 :15 | réponse | 0,3 |
| C | 10h | 01/10/2023 | 00 :45 | réponse | 0,2 |
| C | 10i | 02/10/2023 | 00 :45 | absence de réponse | - |

Ainsi, des informations d'identifiant de cellule, d'identifiant de compteur, d'horodatage, d'état d'obtention d'une réponse et de temps de réponse sont corrélées entre elles dans une mémoire du système de collecte de données 100.

Lors de l'étape **S2,** le système de collecte de données 100 établit des paramètres de fonctionnement propres à chacun des compteurs communicants concernés par la collecte ou en d'autres termes le système de collecte de données 100 établit un profil de comportement pour chacun des compteurs communicants, à partir des informations recensées lors de l'étape S1 pendant une période de durée T et mémorisées. Cette phase d'apprentissage est opérée en procédant par compteur et par tranches horaires, par exemple par compteur et par heure ou par compteur et par quart d'heure, ou encore par compteur et par tranches de cinq minutes, ces exemples n'étant pas limitatifs. Selon un premier mode de réalisation, le système de collecte de données 100 opère cette phase d'apprentissage en opérant une analyse statistique visant à déterminer à quel moment chacun des compteurs communicants présente la plus grande probabilité de répondre à un message qui lui est adressé, notamment à un message de collecte de données. Selon un deuxième mode de réalisation, le système de collecte de données 100 opère cette phase d'apprentissage en opérant un apprentissage de type *« machine learning »* capable de fournir une probabilité de réussite de communication pour chacun des compteurs concernés par une collecte à venir.

Chacun de ces modes de réalisation peut être réalisé selon des variantes ayant respectivement pour objectif :
- de respecter une contrainte horaire de fin de collecte, telle que par exemple visant à avoir collecté les données en provenance de tous les compteurs avant le lendemain à huit heures du matin, ou
- de réduire sensiblement l'utilisation des ressources du réseau de communication utilisé (ici le réseau de communication 1000) aux fins d'éviter toute redondance d'envoi de message vers le compteur jusqu'à obtention des données à collecter.

Selon un mode de réalisation, lorsque l'analyse est de type statistique et lorsque l'objectif est de respecter une contrainte horaire, le système de collecte de données 100 détermine, pour chacun des compteurs, un créneau horaire pour lequel ce compteur présente un temps de collecte le plus rapide tout en présentant un seuil minimal de 50% en taux de réponse à des messages qui lui sont adressés.

Selon un mode de réalisation, lorsque l'analyse est de type statistique et lorsque l'objectif est de réduire l'usage des ressources du réseau de communication utilisé, le système de collecte de données 100 détermine un créneau horaire pour lequel un compteur présente un taux maximal de réponse à des messages qui lui sont adressés.

Selon un mode de réalisation, lorsque la phase d'apprentissage exécute un apprentissage de type « *machine learning »* dont l'objectif est de déterminer une probabilité de réussite de communication en fonction des circonstances de l'envoi d'un message à un compteur communicant (par exemple selon le jour de la semaine, la date, l'heure, le caractère férié ou non d'un jour, etc.) un algorithme de type « arbre de décision » est utilisé. Selon un mode de réalisation, l'algorithme utilisé est un algorithme pour classifier (encore appelé classifieur) chaque créneau horaire selon deux classes respectivement associées à un compteur qui communique et à un compteur qui ne communique pas. Ainsi chaque créneau horaire présentera une probabilité d'appartenance à une classe pour un compteur donné. Selon un mode de réalisation, il est considéré que si un créneau horaire présente une probabilité d'appartenance supérieure à 0,6 pour une classe, alors ce créneau horaire appartient à cette classe. Un tel algorithme a pour objectif de maximiser le taux de succès d'une collecte de données en respectant une échéance de collecte ou de minimiser le nombre de communications nécessaires à une collecte de données disponible dans un compteur communicant donné.

Selon un mode de réalisation, l'entrainement du classifieur, de type arbre de décision, se base sur deux jeux d'informations dont l'un, premier, comprend toutes les premières informations précédemment recueillies à l'étape S1, horodatées (enregistrées en association avec la date et l'heure courante), enrichies avec des deuxièmes informations que sont le jour de la semaine, le mois de l'année, le caractère férié ou non du jour concerné, le caractère urbain ou rural de la position du compteur identifiée par la cellule du réseau via laquelle il communique, et dont l'autre, second, comprend la classe d'appartenance de chaque information (par exemple une classe 0 selon laquelle le compteur communique et une classe 1 selon laquelle le compteur ne communique pas).

Astucieusement, l'algorithme ainsi entrainé est utilisé lors de l'étape S2, le cas échéant (variante d'un mode d'apprentissage de type « machine learning ») pour déterminer quel est le meilleur créneau horaire pour chacun des compteurs communicants concernés par une collecte prévue et à venir.

Au terme d'un apprentissage ainsi réalisé à l'étape S2, le système de collecte de données 100 a la capacité de déterminer, à l'étape S3, un ordonnancement de collecte en fonction de contraintes prédéfinies, par exemple en fonction de contraintes calendaires d'une collecte de données (quel jour, quelle durée, etc.).

Selon un mode de réalisation, l'ordonnancement de collecte est réalisé en procédant cellule par cellule et dans un but d'opérer ultérieurement une collecte en parallèle (simultanément) dans chacune des cellules concernées du réseau de communication.

Selon un mode de réalisation, et en fonction de contraintes d'organisation de collecte(s), telles que par exemple des contraintes calendaires (par exemple, dans la nuit du mardi au mercredi, entre 21 heures et 9 heures, en zone urbaine) l'ordonnancement est établi de sorte à collecter les données de tous les compteurs qui sont identifiés comme étant en capacité de répondre au moment prévu de la collecte et n'étant en outre pas en capacité de répondre dans les moments qui suivent la collecte. La collecte concerne alors le maximum de compteurs dans chacune des cellules répondant à ce critère en utilisant le maximum de ressources du réseau de communication qui sont imparties (ou dédiées) à la collecte pendant la durée de la collecte.

Selon un mode de réalisation, des tables de collecte de données sont générées de sorte à établir un ordre (une séquence) de collecte, en référence à chacune des cellules A, B et C, du réseau de communication 1000.

Lorsqu'un ordonnancement de collecte a été établi par le système de collecte de données 100 par recensement d'informations sur le comportement observé de compteurs concernés par la collecte objet de l'ordonnancement, puis par la détermination de paramètres (profil) de fonctionnement pour chacun des compteurs, et en tenant compte d'un objectif défini en termes de contraintes calendaires et/ou de niveau de ressources réseau utilisées, le système de collecte de données 100 peut exécuter la collecte des données lors de l'étape S4, en procédant selon le séquencement établi et en opérant parallèlement (simultanément) dans les différentes cellules A, B et C du réseau de communication.

Selon un mode de réalisation et lorsque la collecte est terminée au terme de l'étape S4, c'est-à-dire lorsque le délai imparti pour collecter des données est échu, une étape optionnelle **S5** est exécutée par le système 100 de collecte de données, visant à déterminer le taux de compteurs communicants ayant pu être relevés avec succès, c'est-à-dire le taux de compteurs communicants ayant pu adresser les données à collecter en réponse à un message de collecte en provenance du système de collecte de données 100.

Si le taux de collecte déterminé à l'étape S5 est supérieur à un objectif de collecte prédéfini (étape S5, sortie « oui »), alors le procédé est complété et aucune nouvelle opération de collecte ne sera réalisée avant qu'une nouvelle phase de collecte ne soit prévue selon la politique de collecte définie. A contrario, si le taux de collecte déterminé à l'étape S5 est insuffisant (étape S5, sortie « non »), alors le procédé reboucle à l'étape S1 en modifiant par exemple le paramètre T de durée de la phase de labellisation visant à obtenir de nouvelles informations représentatives du comportement des compteurs communicants présents dans le réseau de communication 1000. Chaque nouvelle itération de l'étape S1 opérée lorsque le taux de complétude de la collecte est jugé insuffisant est considéré comme une phase de renforcement de l'apprentissage qui vise notamment à identifier les compteurs communicants qui sont impliqués dans le fait qu'il n'a pas été possible d'atteindre le taux de collecte ciblé. Selon un mode de réalisation, une nouvelle itération de l'étape S1 est réalisée avec une durée de collecte des informations représentatives du comportement des compteurs supérieure à celle définie initialement (par exemple supérieure à sept jours).

Selon un mode de réalisation, et considérant que certains compteurs peuvent être identifiés comme peu enclins à répondre, par exemple du fait de perturbations dans les communications par transmissions électromagnétiques, une stratégie de communication avec ces compteurs peut être avantageusement établie, par exemple en ne réitérant pas systématiquement une tentative de communication pour toutes les périodes de temps élémentaires considérées par le système de collecte de données 100 mais en ne tentant de collecter des données qu'auprès d'un quantum prédéfini de compteurs communicants à relever pendant une période de temps élémentaire. En d'autres termes, si le système réitère des tentatives de communication avec des compteurs « difficiles à joindre » toutes les cinq minutes, il ne tentera d'atteindre que 70 ou 60% des compteurs restant à joindre, par exemple, par période de cinq minutes, pour éviter un engorgement du réseau de communication 1000. Bien évidemment le taux de compteurs objet d'une nouvelle tentative peut être quelconque, entre 0 et 100% selon les résultats précédemment obtenus.

Selon un mode de réalisation, et lorsqu'un nouveau compteur communicant est inséré dans le réseau de communication 1000, le système de collecte de données 100 prévoit d'opérer une planification de collecte de données identique à celle prévue pour un compteur communicant géographiquement proche d'un compteur communicant déjà connu du système de collecte 100, en termes de comportement. Si une telle stratégie ne permet pas de collecter des données depuis ce compteur, sans difficulté, alors une phase d'apprentissage devra avoir lieu selon le procédé décrit.

Il est à noter que sur la Fig. 3, le caractère optionnel de l'étape S5 est illustré par des lignes pointillées.

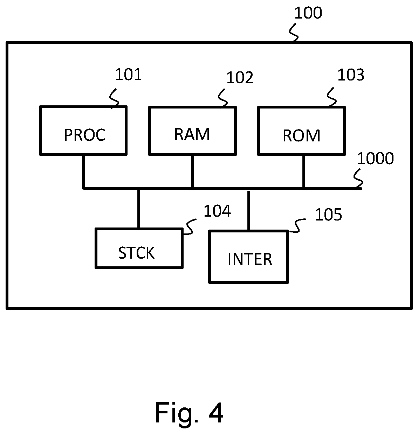

La **Fig. 4** illustre schématiquement un exemple d'architecture interne du système de collecte de données 100, encore appelé ici dispositif de collecte de données ou serveur de gestion d'un fournisseur de service(s). Selon l'exemple d'architecture matérielle représenté à la Fig. 4, le système de collecte 100 comprend alors, reliés par un bus de communication 120 : un processeur ou CPU (« Central Processing Unit » en anglais) 121 ; une mémoire vive RAM (« Random Access Memory » en anglais) 122 ; une mémoire morte ROM (« Read Only Memory » en anglais) 123 ; une unité de stockage telle qu'un disque dur (ou un lecteur de support de stockage, tel qu'un lecteur de cartes SD (« Secure Digital » en anglais) 124 ; au moins une interface de communication 125 permettant au système de collecte de données 100 de communiquer avec des dispositifs présents dans le réseau de communication comprenant le système de collecte de données 100 dont notamment les compteurs communicants 10a, 10b, 10c, 10d, 10e, 10 f et 10h, via les stations de base STA-A, STA-B et STA-C.

Le processeur 121 est capable d'exécuter des instructions chargées dans la RAM 122 à partir de la ROM 123, d'une mémoire externe (non représentée), d'un support de stockage (tel qu'une carte SD), ou d'un réseau de communication. Lorsque le système de collecte de données 100 est mis sous tension, le processeur 121 est capable de lire de la RAM 122 des instructions et de les exécuter. Ces instructions forment un programme d'ordinateur causant la mise en œuvre, par le processeur 121, du procédé décrit en relation avec la Fig. 3 ou l'une de ses variantes.

Tout ou partie du procédé implémenté par le système de collecte de données 100, ou ses variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le système de collecte de données 100 comprend de la circuiterie électronique configurée pour mettre en œuvre le procédé décrit en relation avec lui-même ainsi qu'avec des dispositifs connectés au réseau de communication 1000. Bien évidemment, le système de collecte de données 100 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

L'invention ne se limite pas aux seuls modes de réalisation et exemple décrits mais concerne plus largement tout procédé de collecte, opérant via un réseau de communication de type cellulaire, adapté à la collecte de données disponibles dans un ensemble de compteurs communicants et exécuté dans un dispositif de collecte de données connecté à ce réseau, et comprenant : obtenir des premières informations représentatives du comportement des compteurs, puis établir des paramètres représentatifs (ou profils) du comportement de chacun des compteurs communicants à partir de ces informations, en vue d'établir un ordonnancement de collecte de données de tout ou partie des compteurs à partir des paramètres (ou profils) représentatifs du comportement de chacun des compteurs, et transmettre ensuite des messages de collecte de données vers les compteurs communicants selon l'ordonnancement qui a été établi. En particulier, un classifieur d'un autre type qu'un arbre de décision peut être utilisé pour la phase d'apprentissage opérée lors de l'étape S2.

## Revendications

1. Procédé de collecte, via un réseau de communication (1000) de type cellulaire, de données disponibles dans un ensemble de compteurs communicants (10a, 10b, 10c, 10d, 10e, 10f, 10g, 10h, 10i), le procédé étant exécuté dans un système de collecte de données (100) connecté audit réseau (1000) et le procédé comprenant :
- i) obtenir des premières informations (S1) représentant un comportement de performance de communication desdits compteurs (10a, 10b, 10c, 10d, 10e, 10f, 10g, 10h, 10i), lesdites premières informations comprenant au moins un temps de réponse (tr) et un état d'obtention d'une réponse pour chaque compteur en référence à un horodatage (d,h) et un identifiant de cellule (Ceid),
- ii) établir des paramètres (S2) représentatifs d'un comportement de performance de communication de chacun des compteurs communicants (10a, 10b, 10c, 10d, 10e, 10f, 10g, 10h, 10i) par analyse statistique ou apprentissage machine basé sur des données de communication observées,
- iii) établir un ordonnancement de collecte (S3) de données de tout ou partie desdits compteurs (10a, 10b, 10c, 10d, 10e, 10f, 10g, 10h, 10i) à partir desdits paramètres représentatifs du comportement de chacun des compteurs, dans lequel ledit ordonnancement est établi pour optimiser la collecte de données sur la base du comportement de performance de communication appris des compteurs, et,
- iv) transmettre des messages de collecte (S4) de données vers lesdits compteurs (10a, 10b, 10c, 10d, 10e, 10f, 10g, 10h, 10i) selon ledit ordonnancement établi.

2. Procédé de collecte de données selon la revendication 1, dans lequel établir ledit ordonnancement (S3) de collecte de données à partir desdits paramètres est réalisé en référence, pour chacun des compteurs communicants, à un identifiant de cellule (Ceid) à partir de laquelle un compteur communicant est accessible.

3. Procédé de collecte de données selon l'une des revendications 1 à 2, dans lequel l'analyse statistique est opérée en référence à un temps maximal de collecte.

4. Procédé de collecte de données selon l'une des revendications 1 à 2, dans lequel l'analyse statistique est opérée en référence à une utilisation minimale dudit réseau de communication.

5. Procédé de de collecte de données selon l'une des revendications 1 à 2, dans lequel établir lesdits paramètres représentatifs du comportement de chacun des compteurs comprend un apprentissage au moyen d'un module de type classifieur.

6. Procédé de collecte de données selon la revendication 5, dans l'apprentissage au moyen d'un module de type classifieur est opéré en référence à un temps maximal de collecte.

7. Procédé de collecte de données selon la revendication 5, dans l'apprentissage au moyen d'un module de type classifieur est opéré en référence à une utilisation minimale dudit réseau de communication.

8. Système de collecte de données (100), via un réseau de communication (1000) de type cellulaire, de données disponibles dans un ensemble de compteurs communicants, le système de collecte comprenant de la circuiterie électronique configurée pour :
- i) obtenir des premières informations (S1) représentatives d'un comportement de performance de communication desdits compteurs, lesdites premières informations comprenant au moins un temps de réponse et un état d'obtention d'une réponse pour chaque compteur en référence à un horodatage et un identifiant de cellule,
- ii) établir des paramètres représentatifs d'un comportement de performance de communication (S2) de chacun des compteurs communicants par analyse statistique ou apprentissage machine basé sur des données de communication observées
- iii) établir un ordonnancement de collecte (S3) de données de tout ou partie desdits compteurs à partir desdits paramètres représentatifs du comportement de chacun des compteurs, dans lequel ledit ordonnancement est établi pour optimiser la collecte de données sur la base du comportement de performance de communication appris des compteurs, et,
- iv) transmettre des messages de collecte (S4) de données vers lesdits compteurs selon ledit ordonnancement établi.

9. Système de collecte de données selon la revendication 8, comprenant de la circuiterie électronique configurée pour établir ledit ordonnancement de collecte de données à partir desdits paramètres en référence, pour chacun des compteurs communicants, à un identifiant de cellule à partir de laquelle un compteur communicant est accessible.

10. Système de collecte de données selon l'une des revendications 8 à 9, comprenant en outre de la circuiterie électronique configurée pour opérer l'analyse statistique en référence à un temps maximal de collecte.

11. Système de collecte de données selon l'une des revendications 8 à 9, comprenant en outre de la circuiterie électronique configurée pour opérer l'analyse statistique en référence à une utilisation minimale dudit réseau de communication.

12. Système de de collecte de données selon l'une des revendications 8 à 9, comprenant en outre de la circuiterie électronique configurée pour établir lesdits paramètres représentatifs du comportement de chacun des compteurs par un apprentissage au moyen d'un module de type classifieur.

13. Système de collecte de données selon la revendication 12, comprenant en outre de la circuiterie électronique configurée pour opérer ledit apprentissage au moyen d'un module de type classifieur, en référence à un temps maximal de collecte.

14. Système de collecte de données selon la revendication 12, comprenant en outre de la circuiterie électronique configurée pour opérer ledit apprentissage au moyen d'un module de type classifieur, en référence à une utilisation minimale dudit réseau de communication.

15. Produit programme d'ordinateur **caractérisé en ce qu'**il comprend des instructions de codes de programme pour exécuter les étapes du procédé selon l'une quelconque des revendications 1 à 7, lorsque ledit programme est exécuté par un processeur dudit système de collecte de données

16. Support de stockage d'informations comprenant un produit programme d'ordinateur selon la revendication 15.

## Patentansprüche

1. Verfahren zur Sammlung von Daten, die in einer Anordnung von intelligenten Zählern (10a, 10b, 10c, 10d, 10e, 10f, 10g, 10h, 10i) verfügbar sind, über ein zellulares Kommunikationsnetz (1000), wobei das Verfahren in einem Datensammelsystem (100) ausgeführt wird, das mit dem Netz (1000) verbunden ist, und wobei das Verfahren Folgendes umfasst:
- i) Erhalten von ersten Informationen (S1), die ein Kommunikationsleistungsverhalten der Zähler (10a, 10b, 10c, 10d, 10e, 10f, 10g, 10h, 10i) darstellen, wobei die ersten Informationen wenigstens eine Antwortzeit (tr) und einen Status bezüglich des Erhalts einer Antwort für jeden Zähler in Bezug auf einen Zeitstempel (d,h) und eine Zellkennung (Ceid) umfassen,
- ii) Festlegen von Parametern (S2), die für ein Kommunikationsleistungsverhalten jedes der intelligenten Zähler (10a, 10b, 10c, 10d, 10e, 10f, 10g, 10h, 10i) repräsentativ sind, durch statistische Analyse oder maschinelles Lernen basierend auf festgestellten Kommunikationsdaten,
- iii) Festlegen einer Ablaufplanung für die Sammlung (S3) von Daten aller oder einiger der Zähler (10a, 10b, 10c, 10d, 10e, 10f, 10g, 10h, 10i) anhand der Parameter, die für das Verhalten jedes der Zähler repräsentativ sind, wobei die Ablaufplanung festgelegt wird, um die Datensammlung auf der Grundlage des gelernten Kommunikationsleistungsverhaltens der Zähler zu optimieren, und
- iv) Senden von Datensammlungsmitteilungen (S4) an die Zähler (10a, 10b, 10c, 10d, 10e, 10f, 10g, 10h, 10i) gemäß der festgelegten Ablaufplanung.

2. Datensammlungsverfahren nach Anspruch 1, wobei Festlegen der Ablaufplanung (S3) für die Sammlung von Daten anhand der Parameter für jeden der intelligenten Zähler in Bezug auf eine Zellkennung (Ceid) durchgeführt wird, anhand welcher ein intelligenter Zähler zugreifbar ist.

3. Datensammlungsverfahren nach einem der Ansprüche 1 bis 2, wobei die statistische Analyse in Bezug auf eine maximale Sammlungszeit durchgeführt wird.

4. Datensammlungsverfahren nach einem der Ansprüche 1 bis 2, wobei die statistische Analyse in Bezug auf eine minimale Auslastung des Kommunikationsnetzes durchgeführt wird.

5. Datensammlungsverfahren nach einem der Ansprüche 1 bis 2, wobei Festlegen der Parameter, die für das Verhalten jedes der Zähler repräsentativ sind, ein Lernen mittels eines Moduls vom Typ Klassifikator umfasst.

6. Datensammlungsverfahren nach Anspruch 5, wobei das Lernen mittels eines Moduls vom Typ Klassifikator in Bezug auf eine maximale Sammlungszeit durchgeführt wird.

7. Datensammlungsverfahren nach Anspruch 5, wobei das Lernen mittels eines Moduls vom Typ Klassifikator in Bezug auf eine minimale Auslastung des Kommunikationsnetzes durchgeführt wird.

8. System zur Sammlung von Daten (100), von Daten, die in einer Anordnung von intelligenten Zählern verfügbar sind, über ein zellulares Kommunikationsnetz (1000), wobei das Sammlungssystem eine elektronische Schaltung umfasst, die für Folgendes ausgebildet ist:
- i) Erhalten von ersten Informationen (S1), die für ein Kommunikationsleistungsverhalten der Zähler repräsentativ sind, wobei die ersten Informationen wenigstens eine Antwortzeit und einen Status bezüglich des Erhalts einer Antwort für jeden Zähler in Bezug auf einen Zeitstempel und eine Zellkennung umfassen,
- ii) Festlegen von Parametern, die für ein Kommunikationsleistungsverhalten jedes der intelligenten Zähler repräsentativ sind (S2), durch statistische Analyse oder maschinelles Lernen basierend auf festgestellten Kommunikationsdaten
- iii) Festlegen einer Ablaufplanung für die Sammlung (S3) von Daten aller oder einiger der Zähler anhand der Parameter, die für das Verhalten jedes der Zähler repräsentativ sind, wobei die Ablaufplanung festgelegt wird, um die Datensammlung auf der Grundlage des gelernten Kommunikationsleistungsverhaltens der Zähler zu optimieren, und
- iv) Senden von Datensammlungsmitteilungen (S4) an die Zähler gemäß der festgelegten Ablaufplanung.

9. Datensammlungssystem nach Anspruch 8, das eine elektronische Schaltung umfasst, die dazu ausgebildet ist, die Ablaufplanung für die Sammlung von Daten anhand der Parameter für jeden der intelligenten Zähler in Bezug auf eine Zellkennung festzulegen, anhand welcher ein intelligenter Zähler zugreifbar ist.

10. Datensammlungssystem nach einem der Ansprüche 8 bis 9, das ferner eine elektronische Schaltung umfasst, die dazu ausgebildet ist, die statistische Analyse in Bezug auf eine maximale Sammlungszeit durchzuführen.

11. Datensammlungssystem nach einem der Ansprüche 8 bis 9, das ferner eine elektronische Schaltung umfasst, die dazu ausgebildet ist, die statistische Analyse in Bezug auf eine minimale Auslastung des Kommunikationsnetzes durchzuführen.

12. Datensammlungssystem nach einem der Ansprüche 8 bis 9, das ferner eine elektronische Schaltung umfasst, die dazu ausgebildet ist, die Parameter, die für das Verhalten jedes der Zähler repräsentativ sind, durch ein Lernen mittels eines Moduls vom Typ Klassifikator festzulegen.

13. Datensammlungssystem nach Anspruch 12, das ferner eine elektronische Schaltung umfasst, die dazu ausgebildet ist, das Lernen mittels eines Moduls vom Typ Klassifikator in Bezug auf eine maximale Sammlungszeit durchzuführen.

14. Datensammlungssystem nach Anspruch 12, das ferner eine elektronische Schaltung umfasst, die dazu ausgebildet ist, das Lernen mittels eines Moduls vom Typ Klassifikator in Bezug auf eine minimale Auslastung des Kommunikationsnetzes durchzuführen.

15. Computerprogrammprodukt, **dadurch gekennzeichnet, dass** es Programmcode-Anweisungen umfasst, um die Schritte des Verfahrens nach einem der Ansprüche 1 bis 7 auszuführen, wenn das Programm von einem Prozessor des Datensammlungssystems ausgeführt wird.

16. Informationsspeichermedium umfassend ein Computerprogrammprodukt nach Anspruch 15.

## Claims

1. Method for collecting, via a communication network (1000) of the cellular type, data available in a set of smart meters (10a, 10b, 10c, 10d, 10e, 10f, 10g, 10h, 10i), the method being implemented in a data collection system (100) connected to said network (1000), and the method comprising:
- i) obtaining first information (S1) representing a communication-performance behaviour of said meters (10a, 10b, 10c, 10d, 10e, 10f, 10g, 10h, 10i), said first information comprising at least one response time (tr) and a state of obtaining a response for each meter with reference to a timestamp (d, h) and a cell identifier (Ceid),
- ii) establishing parameters (S2) representing a communication-performance behaviour of each of the smart meters (10a, 10b, 10c, 10d, 10e, 10f, 10g, 10h, 10i) by statistical analysis or machine learning based on communication data observed,
- iii) establishing a scheduling of collection (S3) of data from all or some of said meters (10a, 10b, 10c, 10d, 10e, 10f, 10g, 10h, 10i) from said parameters representing the behaviour of each of the meters, wherein said scheduling is established to optimise the data collection on the basis of the communication-performance behaviour learned from the meters, and
- iv) transmitting data collection messages (S4) to said meters (10a, 10b, 10c, 10d, 10e, 10f, 10g, 10h, 10i) in accordance with said scheduling established.

2. Data collection method according to claim 1, wherein establishing said data-collection scheduling (S3) from said parameters is implemented with reference, for each of the smart meters, to an identifier (Ceid) of a cell from which a smart meter is accessible.

3. Data collection method according to one of claims 1 to 2, wherein the statistical analysis is implemented with reference to a maximum collection time.

4. Data collection method according to one of claims 1 to 2, wherein the statistical analysis is implemented with reference to a minimum use of said communication network.

5. Data collection method according to one of claims 1 to 2, wherein establishing said parameters representing the behaviour of each of the meters comprises a learning by means of a module of the classifier type.

6. Data collection method according to claim 5, wherein the learning by means of a module of the classifier type is implemented with reference to a maximum collection time.

7. Data collection method according to claim 5, wherein the learning by means of a module of the classifier type is implemented with reference to a minimum use of said communication network.

8. System (100) for collecting, via a communication network (1000) of the cellular type, data available in a set of smart meters, the collection system comprising electronic circuitry configured to:
i) obtain first information (S1) representing a communication-performance behaviour of said meters, said first information comprising at least one response time and a state of obtaining a response for each meter with reference to a timestamp and a cell identifier,
ii) establish parameters representing a communication-performance behaviour (S2) of each of the smart meters by statistical analysis or machine learning based on communication data observed,
iii) establish a scheduling of collection (S3) of data from all or some of said meters from said parameters representing the behaviour of each of the meters, wherein said scheduling is established to optimise the data collection on the basis of the communication-performance behaviour learned from the meters, and
iv) transmit data collection messages (S4) to said meters in accordance with said scheduling established.

9. Data collection system according to claim 8, comprising electronic circuitry configured to establish said data-collection scheduling from said parameters with reference, for each of the smart meters, to an identifier of a cell from which a smart meter is accessible.

10. Data collection system according to one of claims 8 to 9, furthermore comprising electronic circuitry configured to make the statistical analysis with reference to a maximum collection time.

11. Data collection system according to one of claims 8 to 9, furthermore comprising electronic circuitry configured to make the statistical analysis with reference to a minimum use of said communication network.

12. Data collection system according to one of claims 8 to 9, furthermore comprising electronic circuitry configured to establish said parameters representing the behaviour of each of the meters by learning by means of a module of the classifier type.

13. Data collection system according to claim 12, furthermore comprising electronic circuitry configured to implement said learning by means of a module of the classifier type, with reference to a maximum collection time.

14. Data collection system according to claim 12, furthermore comprising electronic circuitry configured to implement said learning by means of a module of the classifier type, with reference to a minimum use of said communication network.

15. Computer program product **characterised in that** it comprises program code instructions for performing the steps of the method according to any one of claims 1 to 7, when said program is executed by a processor of said data collection system.

16. Information storage medium comprising a computer program product according to claim 15.
